# EUROPEAN PATENT APPLICATION

(11) **EP 1 929 880 A1**
(43) Date of publication of application: **11.06.2008**
(21) Application number: 06291879.2
(22) Date of filing: 05.12.2006
(51) Int. Cl.: A23L 1/00, A23L 1/0532, A23C 9/137, A23C 13/12, A23C 9/154

(54) **New products with a dairy milk filling and a gel coating**

(71) Applicant: COMPAGNIE GERVAIS DANONE, 75009 Paris (FR)
(72) Inventor: Roth, Corina, 64747 Breuberg (DE); Kramer, Evelyn, 97199 Ochsenfurt (DE)
(74) Representative: Warcoin, Jacques

(57) **Abstract**

The present invention relates to a food product in a 3-D form comprising a jellified coating with a dairy product inside and to the process of manufacturing that food product.

In particular the invention provides a food product comprising an external jellified coating and an internal filling comprising a dairy product which is completely enclosed in the external jellified coating, and the process for the manufacture of this product.

## Description

The present invention relates to a food product in a 3-D form comprising a jellified coating with a dairy product inside and to the process of manufacturing that food product.

In view of the large amount of dairy products consumed by consumers, there is always an interest in providing new, different and fancy dairy products.
Moreover, dairy products are known to be good for the health of consumers, especially children. Thanks to the calcium contained in such products, there is an interest to find new and attractive formulations of dairy products, to incite them to eat more dairy products.
The present invention provides such a new shape of dairy products.

According to one aspect, the invention provides a food product comprising an external jellified coating and an internal filling comprising a dairy product which is completely enclosed in the external jellified coating.

In a preferred embodiment, the external jellified coating of the present invention comprises fruits juice, water and/or milk ingredients.
In a very preferred embodiment, the external jellified coating of the present invention comprises at least fruits juice. According to the present invention, the fruits juice is in a natural form or a concentrate form or in powder form.

Fruits according the present invention can be chosen for example between orange, mandarin, grapefruit, lemon, rhubarb, plum, grape, mango, passion fruit, pineapple, coconut, peach, apricot, pear, apple, melon, watermelon, kiwi, carrot, red fruit as raspberry, cranberries, strawberry, blueberry, blackberry, cherry, redcurrants or whortleberry.

Moreover, according to the present invention, the fruits juice can be based on one or several fruits.

In a preferred embodiment, the external jellified coating comprises at least one, or a combination of, gelling agent.
The gelling agent according to the present invention is chosen among of the following gelling agents:
➢ E400 Alginic acid
➢ E401 Sodium alginate
➢ E402 Potassium alginate
➢ E403 Ammonium alginate
➢ E404 Calcium alginate
➢ E405 Propane-1,2-diol alginate (Propylene glycol alginate)
➢ E406 Agar
➢ E407 Carrageenan
➢ E407a Processed eucheuma seaweed
➢ E410 Locust bean gum (Carob gum)
➢ E412 Guar gum
➢ E413 Tragacanth
➢ E414 Acacia gum
➢ E415 Xanthan gum
➢ E416 Karaya gum
➢ E417 Tara gum
➢ E418 Gellan gum
➢ E425 Konjac (i) Konjac gum (ii) Konjac glucomannane
➢ E440 Pectins (i) pectin (ii) amidated pectin
➢ E441 Gelatine
➢ E461 Methylcellulose

The number E4XXX is referring to food additive codes usually used for food product labels in the European Union.
The gelling agent according to the present invention is preferably chosen between agar, gellan, carrageenan and gelatine.

Constituents forming the external jellified coating before jellifying can be powders (for example gelling agents, sugar, milk powder, fat powder, acid powder) diluted in liquid as for example water, fruits juice, milk ingredients. Milk ingredients are in particular milk, cream, yoghurt or their mixture.

The external jellified coating has to show good microbiologically stability during shelf life, and particularly avoid problem of water migration.

To obtain a good microbiologically stability the external jellified coating product according to the present invention has preferably a water activity below 0.9. Preferably, the external jellified coating has a water activity between 0,5 to 0,85, and more preferably of 0,80.

Moreover, to obtain a good microbiologically stability, the external jellified coating product according to the present invention has a pH below 7. Preferably, the external jellified coating has a pH between 2 to 5 and more preferably 3.

In a preferred embodiment, the internal filling according to the present invention is in liquid or semi-liquid form.

The semi-liquid form according to the present invention is an intermediary state between liquid form and solid form, and has the characteristic to be pumpable.

Constituents forming the internal filling can be powders (for example milk powder) diluted in liquids as for example water, milk, cream and/or yoghurt.

According to the present invention, constituents forming the external coating are gelling agent, water, sweetening agents chosen for example between dextrose, fructose, saccharose, fruit juice concentrate, sweetener and bulking agents chosen for example between milk or milk products, fat powder, fibre, acid, fruit or fruit preparation and flavour.

The possible range for each constituent of the external jellified coating according to the present invention is shown in table 1, with two examples of formula A and B.

**Table 1: Formula of the external jellified coating.**

| **Ingredient:** | **Possibilities:** | **+Range: [%]** | **Example A: [%]** | **Example B: [%]** |
|---|---|---|---|---|
| **Gelling agents** | | 0,2 - 5,0 | | |
| | agar | 1,5 - 5,0 | | 2,0 |
| | gellan | 0,2 - 1,5 | 1,0 | |
| | carrageenan | 1,5 - 5,0 | | |
| | gelatine | 3 - 12 | | |
| Water | | Ad to 100 | 43,8 | 68,7 |
| **Sweetening agents** | | 1,0 - 41,0 | | |
| | dextrose | 0 - 4,0 | | |
| | fructose | 0 - 10,0 | | |
| | saccharose | 0 - 40,0 | | |
| | fruit juice concentrate | 0 - 50,0 | 40,0 | 19,0 |
| | sweetener | 0 - 1,0 | | |
| **Bulking agents** | | | | |
| | milk or milk products powder | 0 - 20,0 | 12,0 | 9,0 |
| | fat powder | 0 - 10,0 | | |
| | fibre | 0 - 10,0 | | |
| | acid (powder) | 0 - 5,0 | 1,5 | 0,3 |
| | fruit or fruit preparation | 0 - 20,0 | 1,7 (powder) | 1,0 (powder) |
| | flavour | 0 - 2,0 | | |

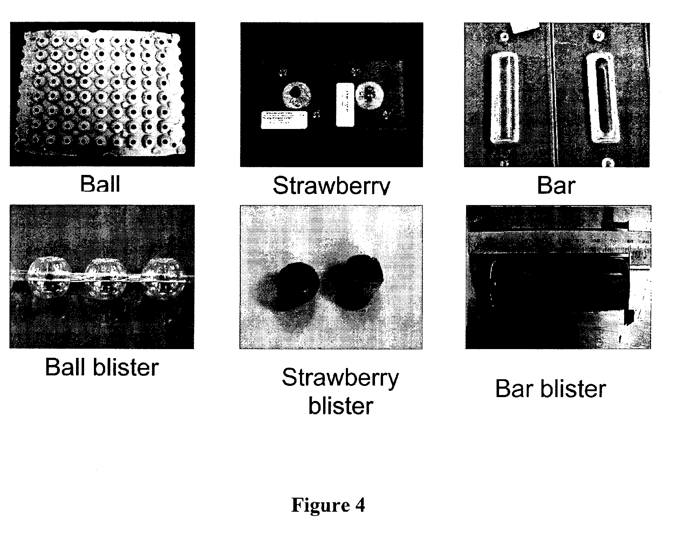

In a preferred embodiment, the food product according to the present invention is in a spherical 3-D form depending on the used moulds or blister. According to the present invention the term "ball" can be used to define the shape of the food product. But according to the present invention, the food product could be in other forms like fruits form (for example strawberry as in figure 4) or bar form. Figure 4 shows pictures of moulds or blisters useable for one-shot technology and examples of shapes obtainable by this technology
According to one aspect, the invention provides a process for the manufacture of a food product according to claims 1 to 9, this process comprising the following steps:
1. the constituent forming the external jellified coating, this constituent being at a temperature greater than its gelling temperature, and the constituent forming the internal filling are simultaneously metered and simultaneously introduced into an intermediate mould or a final packaging and,
2. the said constituents are cooled to a temperature of less than the gelling temperature of the constituent forming the external jellified coating.

Only the temperature of the external jellified coating has to be higher than the gelling temperature; the temperature of the internal filling depends on the viscosity and should be for easier handling in the range of the temperature of the external coating.

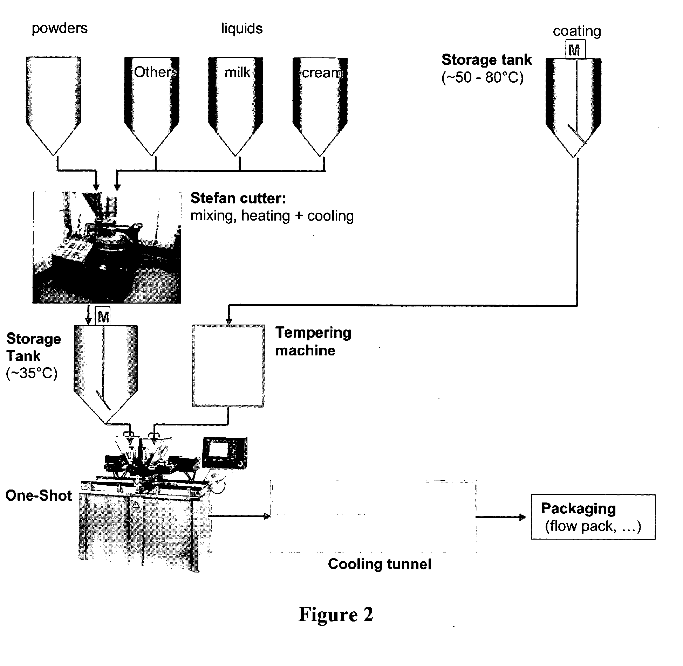

Figure 2 shows an example of process according to the present invention where
1. Constituents (powder and liquid) forming the internal filling are mixed, heated, cooled and tempered in a storage tank.
2. Constituents forming the external jellified coating are stored in a storage tank and then moved to a tempering machine.
3. Constituents forming the external jellified coating, these constituents being at a temperature greater than their gelling temperatures and constituents forming the internal filling are simultaneously introduced in a one shot machine to be simultaneously metered and simultaneously introduced into an intermediate mould or a final packaging and
4. Products obtained are moved in a cooling tunnel to be cooled to a temperature of less than the gelling temperature of the constituent forming the external jellified coating, and packaged.

The first step of the process according to the present invention consisting of simultaneously metered and simultaneously introduced the constituent forming the external jellified coating, this constituent being at a temperature greater than its gelling temperature, and the constituent forming the internal filling into an intermediate mould or a final packaging, is done by one-shot technology. In the one-shot process, only one step is enough to get a final product. The co-extrusion of the one shot system takes place in moulds, which allow a big variation of shapes.

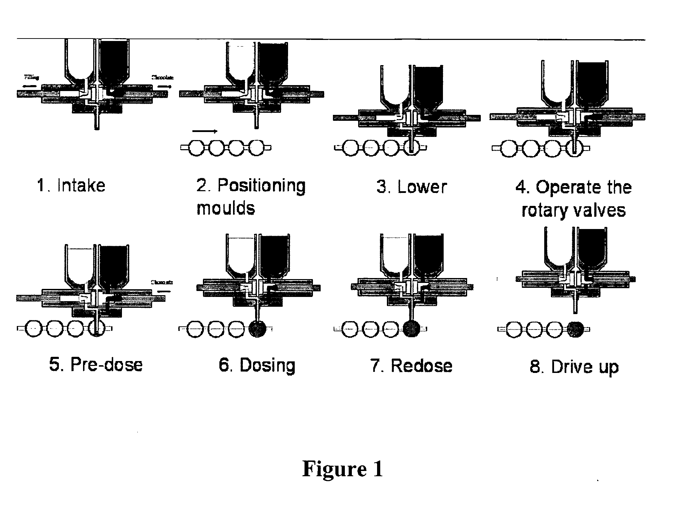

Figure 1 shows the one shot process, with the 8 stages: 1) intake, 2) positioning moulds, 3) lower, 4) operate the rotary valves, 5) pre-dose, 6) dosing, 7) redose, and 8) drive up.

In a preferred embodiment, the simultaneous metering and the simultaneous introduction into the intermediate mould or the final packaging of the constituents in the first step of the process according to the present invention are carried out at a temperature between 25 and 75°C. This temperature will depend on the gel properties.

In a preferred embodiment, the cooling temperature in the second step of the process according to the present invention is between -196 °C (for example with liquid nitrogen) and 15°C and preferably between 0 and 15°C and more preferably between 3 and 8°C.

In a preferred embodiment, constituents forming the internal filling are a) mixed, b) heated, c) cooled and d) tempered at a temperature between 25 and 50°C, before metered with the constituent forming the external jellified coating.

In a preferred embodiment, constituents forming the internal filling are heated at a temperature between 75 and 90°C.

In a preferred embodiment, constituents forming the internal filling are cooled at a temperature between 3 and 10°C.

In a preferred embodiment, constituents forming the internal filling are a) mixed, b) heated at a temperature between 75 and 90°C, cooled at a temperature between 3 and 10°C and d) tempered at a temperature between 25 and 50°C, before metered with the constituent forming the external jellified coating.

In a preferred embodiment, constituents forming the external jellified coating according to the present invention are heated and tempered before metered with the constituents forming the internal filling.

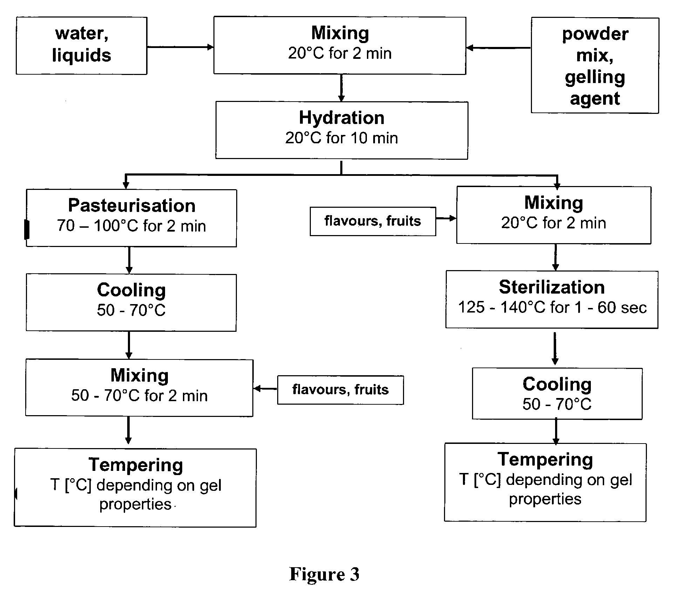

More particularly, a process to obtain constituents forming the external jellified coating in a liquid form, before metering with internal filling is shown in figure 3:
a) liquids and powders are mixed 2 minutes at a temperature of 20°C
b) the mix obtained in step a) is hydrated 10 minutes at a temperature of 20°C
c) the mix obtained in step b) is heated, for pasteurization, 2 to 10 minutes at a temperature between 70 and 100°C, or for sterilization, 0 to 60 secondes at a temperature between 125 and 140°C
d) the mix obtained in step c) is cooled to a temperature between 50 and 70°C
e) flavours and fruits are added to the mix obtained in step d) at a temperature between 50 and 70°C in 2 minutes
f) the mix obtained in step e) is tempered at a temperature between 30 and 100°C depending to the gel properties.

Moreover, constituents forming the external jellified coating are heated in order to obtain a viscosity between 40 and 3500 mPas. This viscosity can be obtained by heating constituents forming the external jellified coating at a temperature between 30 and 100°C.
For the gel coating, different process of heating could be used : pasteurization (70 - 100°C) and sterilization (125 - 140°C). The speed of mixing is depending on the technology, which is used for the gel preparation.

Particularly,
a. if the gelling agent of the external jellified coating is agar, the temperature of heating is comprised between 38 and 52°C in order to obtain a viscosity between 1000 and 3500 mPas,
b. if the gelling agent of the external jellified coating is gellan, the temperature of heating is comprised between 50 and 65°C in order to obtain a viscosity between 800 and 3500 mPas and
c. if the gelling agent of the external jellified coating is carrageenan, the temperature of heating is comprised between 61 and 75°C in order to obtain a viscosity between 40 and 1000 mPas.

Moreover, according to the present invention the internal filling is preferably in liquid form during step 1 of the process.
More preferably, the viscosity of the hot internal filling in the hopper is between 0 and 3500 mPas (milliPascal/second), preferably between 1000 and 3500 mPas.

Table 2, 3 and 4 respectively show the possible range and best solution tested of process parameters according the present invention for preparation of food product with agar, gellan or carrageenan as gelling agent in the external jellified coating.

**Table 2: Process parameters for preparation of food product with agar as gelling agent in the external jellified coating.**

| **Parameter:** | **Description:** | **Unit:** | **Range:** | **Best solution tested:** |
|---|---|---|---|---|
| **Dry matter** | gel | % | 25 - 65 | 49 |
| | filling | % | 35 - 65 | 51 |
| **Temperature** | gel storage hopper | °C | 38 - 52 | 41 |
| | gel mould | °C | 35 - 50 | 38 |
| | gel after cooling (30 min) | °C | 5 - 15 | 10 |
| | filling storage hopper | °C | 30 - 50 | 37 |
| | cooling tunnel | °C | 3 - 8 | 6 |
| | | | | |
| **Viscosity** | gel storage hopper | mPas | 1000 - 3500 | 1800 ± 100 |
| (Rheomat 64 1/s; 10 s; 22) | gel mould gel mould | mPas | 1500 - 4000 | 2100 ± 100 |
| | filling storage hopper | mPas | 1000 - 3500 | 1900 ± 100 |
| | | | | |
| **Stability** | gel (10°C) | g | 2000-4000 | 3300 ± 100 |
| (Texture Analyser TAXT2) | filling (10°C) | g | 20-1000 | 50 ± 5 |

**Table 3: Process parameters for preparation of food product with gellan as gelling agent in the external jellified coating.**

| **Parameter:** | **Description:** | **Unit:** | **Range:** | **Best solution tested:** |
|---|---|---|---|---|
| **Dry matter** | gel | % | 25 - 65 | 49 |
| | filling | % | 35 - 65 | 51 |
| **Temperature** | gel storage hopper | °C | 50 - 65 | 52 |
| | gel mould | °C | 47 - 62 | 49 |
| | gel after cooling (30 min) | °C | 5 - 15 | 10 |
| | filling storage hopper | °C | 30 - 50 | 37 |
| | cooling tunnel | °C | 3 - 8 | 6 |
| | | | | |
| **Viscosity** | gel storage hopper | mPas | 800 - 3500 | 1200 ± 500 |
| (Rheomat 64 1/s; 10 s; 22) | gel mould | mPas | 1500 - 4000 | 1200 ± 500 |
| | filling storage hopper | mPas | 1000 - 3500 | 1900 ± 100 |
| | | | | |
| **Stability** | gel (10°C) | g | 800-4000 | 2000 ± 100 |
| (Texture Analyser TAXT2) | filling (10°C) | g | 20 - 1 000 | 50 ± 5 |

**Table 4: Process parameters for preparation of food product with carrageenan as gelling agent in the external jellified coating.**

| **Parameter:** | **Description:** | **Unit:** | **Range:** | **Best solution tested:** |
|---|---|---|---|---|
| **Dry matter** | gel | % | 25 - 65 | 49 |
| | Filling | % | 35 - 65 | 51 |
| **Temperature** | gel storage | °C | 61 - 75 | 63 |
| | hopper | | | |
| | gel mould | °C | 59 - 73 | 60 |
| | gel after cooling (30 min) | °C | 5 - 15 | 10 |
| | filling storage hopper | °C 30-50 | | 37 |
| | cooling tunnel | °C | 3 - 8 | 6 |
| | | | | |
| **Viscosity** | gel storage hopper | mPas | 40 - 1000 | 600 ± 50 |
| (Rheomat 64 1/s; 10 s; 22) | gel mould gel mould | mPas | 40 - 1000 | 500 ± 50 |
| | filling storage hopper | mPas | 1000 - 3500 | 1900 ± 100 |
| | | | | |
| **Stability** | gel (10°C) | g | 500 - 3000 | 1800 ± 100 |
| (Texture Analyser TAXT2) | filling (10°C) | g | 20 - 1000 | 50 ± 5 |

### Brief description of the drawings:

**Figure 1**: Step one of the process according to claim 10 :one shot process, with the 8 stages: 1) intake, 2) positioning moulds, 3) lower, 4) operate the rotary valves, 5) pre-dose, 6) dosing, 7) redoes, and 8) drive up.
**Figure 2**: Process for the manufacture of a food product according to claim 1.
**Figure 3**: Process to obtain constituents forming the external jellified coating in a liquid form, before metering with internal filling by using pasteurization process or by using sterilization process.
**Figure 4**: Pictures of moulds or blisters useable for one-shot technology and shapes obtainable by this technology.

## Claims

1. Food product comprising an external jellified coating and an internal filling comprising a dairy product which is completely enclosed in the external jellified coating.

2. Food product according to claim 1, **characterised in that** the external jellified coating comprises fruits juice, water and/or milk ingredients.

3. Food product according to claim 2, **characterised in that** the fruits juice is in a natural form or a concentrate form or in a powder form.

4. Food product according to any one of claim 1 to 3, **characterised in that** the external jellified coating comprises at least one, or a combination of, gelling agent.

5. Food product according to claim 4, **characterised in that** the gelling agent is chosen between agar, gellan, carrageenan and gelatine.

6. Food product according to any one of claim 1 to 5, **characterised in that** the external jellified coating has a water activity below 0.9.

7. Food product according to any one of claim 1 to 5, **characterised in that** the external jellified coating has a pH below 7.

8. Food product according to any one of claim 1 to 7 **characterised in that** the internal filling is in liquid or semi liquid form.

9. Food product according to any one of claim 1 to 8, **characterised in that** the food product is in a 3-D form depending on the used moulds or blister.

10. Process for the manufacture of a food product according to claims 1 to 9, this process comprising the following steps :
1) the constituent forming the external jellified coating, this constituent being at a temperature greater than its gelling temperature, and the constituent forming the internal filling are simultaneously metered and simultaneously introduced into an intermediate mould or a final packaging and,
2) the said constituents are cooled to a temperature of less than the gelling temperature of the constituent forming the external jellified coating.

11. Process according to claim 10, **characterised in that** the simultaneous metering and the simultaneous introduction into the intermediate mould or the final packaging of the constituents are carried out at a temperature between 25 and 75°C.

12. Process according to any one of claim 10 to 11, **characterised in that** the cooling temperature is preferably between -196 °C and 15°C.

13. Process according to any one of claim 10 to 12, **characterised in that** the constituents forming the internal filling are a) mixed, b) heated, c) cooledand d) tempered at a temperature between 25 and 50°C, before metered with the constituent forming the external jellified coating.

14. Process according to any one of claim 10 to 13, **characterised in that** the constituents forming the external jellified coating are heated and tempered before metered with the constituents forming the internal filling.

15. Process according to claim 14, **characterised in that** the constituents forming the external jellified coating are heated in order to obtain a viscosity between 40 and 3500 mPas.

16. Process according to claim 15, **characterised in that** the constituents forming the external jellified coating are heated at a temperature between 30 and 100°C.

17. Process according to claim 14, **characterised in that**:
a) if the gelling agent of the external jellified coating is agar, the temperature of heating is comprised between 38 and 52°C in order to obtain a viscosity between 1000 and 3500 mPas,
b) if the gelling agent of the external jellified coating is gellan, the temperature of heating is comprised between 50 and 65°C in order to obtain a viscosity between 800 and 3500 mPas and
c) if the gelling agent of the external jellified coating is carrageenan, the temperature of heating is comprised between 61 and 75°C in order to obtain a viscosity between 40 and 1000 mPas.

18. Process according to any of claims 10 to 17, **characterised in that** the internal filling is in liquid form during step 1.
